# EUROPÄISCHE PATENTSCHRIFT

(11) **EP 3 780 305 B1**
(45) Veröffentlichungstag und Bekanntmachung des Hinweises auf die Patenterteilung: **09.09.2026**
(21) Anmeldenummer: 20188234.7
(22) Anmeldetag: 28.07.2020
(51) Int. Cl.: H02J 1/10, H02J 3/38, H02M 7/493, H02J 1/102, H02M 1/00

(54) **WECHSELRICHTERANORDNUNG FÜR WINDENERGIEANLAGEN UND PHOTOVOLTAIKANLAGEN**
INVERTER ARRANGEMENT FOR WIND TURBINES AND PHOTOVOLTAIC INSTALLATIONS
AGENCEMENT D'ONDULEURS POUR ÉOLIENNES ET INSTALLATIONS PHOTOVOLTAÏQUES

(30) Priorität: 14.08.2019 DE 102019121893
(43) Veröffentlichungstag der Anmeldung: 17.02.2021
(73) Patentinhaber: Wobben Properties GmbH, 26607 Aurich (DE)
(72) Erfinder: Brombach, Johannes, 13437 Berlin (DE)
(74) Vertreter: Eisenführ Speiser

(56) Entgegenhaltungen:
- EP-A1- 0 655 363
- CN-A- 107 394 831

## Beschreibung

Die vorliegende Erfindung betrifft eine Wechselrichteranordnung mit mehreren Wechselrichtern. Die vorliegende Erfindung betrifft auch eine regenerative Energieerzeugungsanlage mit einer Wechselrichteranordnung. Die vorliegende Erfindung betrifft auch ein Verfahren zum Steuern einer regenerativen Erzeugungsanlage.

Windenergieanlagen und Windparks mit mehreren Windenergieanlagen sind bekannt und können unter dem Begriff Windenergiesystem zusammengefasst werden. Ein solches Windenergiesystem erzeugt elektrische Leistung aus Wind und bereitet diese mittels wenigstens eines Wechselrichters zur Einspeisung in ein elektrisches Versorgungsnetz auf. Photovoltaikanlagen sind ebenfalls bekannt und sie erzeugen elektrische Leistung aus Sonneneinstrahlung und speisen diese so erzeugte elektrische Leistung ebenfalls in ein elektrisches Versorgungsnetz ein. Sonneneinstrahlung kann synonym auch als Sonnenstrahlung, Solareinstrahlung oder Solarstrahlung bezeichnet werden.

Wenn ein Windenergiesystem und eine Photovoltaikanlage in örtlicher Nähe zueinander aufgestellt sind, kommt in Betracht, einen gemeinsamen Netzverknüpfungspunkt zu verwenden, an den diese beiden verschiedenen Einspeiser angeschlossen werden. Bspw. kommt in Betracht, dass eine Photovoltaikanlage an einem bereits existierenden Netzverknüpfungspunkt eines Windenergiesystems an das elektrische Versorgungsnetz angeschlossen wird. Ein gemeinsamer Anschluss von einem Windenergiesystem und einer Photovoltaikanlage kann sich besonders durch starke Antikorrelation der Einspeisung aus Windenergie einerseits und Solareinstrahlung andererseits lohnen.

Dabei kommt in Betracht, dass der Netzanschlusspunkt und Teile der technischen Infrastruktur gemeinsam genutzt werden, was Kosten einsparen kann.

Grundsätzlich sind unterschiedliche Integrationslevel denkbar, nämlich die Folgenden:
- Nur der Netzanschlusspunkt wird von beiden Systemen, also dem Windenergiesystem und der Photovoltaikanlage gemeinsam genutzt, ggf. auch ein Hochspannungstransformator.
- Zusätzlich kommt eine gemeinsame Nutzung einer Mittelspannungsschaltanlage in Betracht.
- Auch eine gemeinsame Nutzung eines Mittelspannungstransformators kommt in Betracht, wobei das Windenergiesystem einerseits und die Photovoltaikanlage andererseits jeweils einen eigenen Wechselrichter auf Niederspannungsseite aufweisen können.
- Es kommt grundsätzlich auch ein gemeinsamer Anschluss an einem Zwischenkreis in Betracht, wobei jedes System, also das Windenergiesystem einerseits und die Photovoltaikanlage andererseits einen eigenen Gleichstromsteller aufweisen, um darüber ihre Energie an den gemeinsamen Gleichspannungszwischenkreis zu übertragen.

Soll bspw. eine Photovoltaikanlage an den Gleichspannungszwischenkreis eines Windenergiesystems, also bspw. einer Windenergieanlage, angeschlossen werden, muss die Betriebsspannung der Photovoltaikanlage auf die Zwischenkreisspannung dieser Windenergieanlage angepasst werden und die Photovoltaikanlage muss unter Umständen von der Windenergieanlage galvanisch getrennt werden.

Die Realisierung solcher Voraussetzungen kann aber kompliziert und kostspielig sein, und daher haben normalerweise regenerative Einspeiser eigene Netzverknüpfungspunkte mit eigener technischer Infrastruktur.

Der Erfindung liegt somit die Aufgabe zugrunde, zumindest eines der o.g. Probleme zu adressieren. Insbesondere soll eine möglichst effiziente Lösung geschaffen werden, ein Windenergiesystem zusammen mit einer Photovoltaikanlage an demselben Netzverknüpfungspunkt an ein elektrisches Versorgungsnetz anzuschließen. Zumindest soll zu bisher bekannten Lösungen eine Alternative vorgeschlagen werden.

Erfindungsgemäß wird eine Wechselrichteranordnung nach Anspruch 1 vorgeschlagen. Eine solche Wechselrichteranordnung hat somit mehrere Wechselrichter, insbesondere wenigstens drei Wechselrichter. Vorzugsweise sind aber mehr als drei Wechselrichter vorhanden, insbesondere wenigstens 10 und mehr als 10 Wechselrichter.

Jeder Wechselrichter weist einen Gleichspannungszwischenkreis und einen Wechselstromausgang auf, um aus einer Gleichspannung im Gleichspannungszwischenkreis einen Wechselstrom zu erzeugen und an dem Wechselstromausgang auszugeben. Insoweit kann der Gleichspannungszwischenkreis als Eingang angesehen werden, um darüber dem Wechselrichter Leistung bereitzustellen. Aus dem Gleichspannungszwischenkreis wird dann ein Wechselstrom erzeugt und an dem Wechselstromausgang ausgegeben. Insoweit arbeitet der Wechselrichter in bekannter Art und Weise. Die Leistung, die in den Gleichspannungszwischenkreis eingegeben wurde, kann hierdurch mittels des Wechselstroms, der insbesondere als dreiphasiger Wechselstrom erzeugt wird, ausgegeben werden und zusammen mit weiteren Wechselströmen in ein elektrisches Versorgungsnetz eingespeist werden. Das erfolgt insbesondere an einem Netzanschlusspunkt. Es kann auch ein gemeinsamer Transformator für die Wechselrichteranordnung vorgesehen sein, der aus den Wechselströmen dieser Wechselrichter einen gemeinsamen Wechselstrom höherer Spannung erzeugen kann.

Hier können bspw. mehrere Wechselrichter parallel geschaltet sein, was dem Grunde nach als bekannt angenommen werden darf.

Es wird nun vorgeschlagen, dass die Wechselrichteranordnung eine Zwischenkreisschaltvorrichtung aufweist. Damit werden die Gleichspannungszwischenkreise dieser Wechselrichter elektrisch miteinander verbunden oder voneinander getrennt. Dadurch wird wenigstens ein erster und ein zweiter Teilzwischenkreis gebildet. Sind also bspw. 10 Wechselrichter vorhanden, haben diese jeweils einen Gleichspannungszwischenkreis, sodass zunächst 10 Gleichspannungszwischenkreise vorhanden sind. Von diesen 10 Gleichspannungszwischenkreisen können dann bspw. 7 zu dem ersten Teilzwischenkreis verbunden werden und die verbliebenen 3 zu einem zweiten Teilzwischenkreis.

Die Gleichspannungszwischenkreise jeweils eines Teilzwischenkreises sind somit galvanisch miteinander verbunden, wobei aber zwischen den beiden Teilzwischenkreisen eine galvanische Trennung erfolgt. Der erste und zweite Gleichspannungszwischenkreis können dann unabhängig voneinander betrieben werden. Insbesondere können sie unterschiedliche Spannungshöhen aufweisen, was auch beinhaltet, dass der eine Teilzwischenkreis Schwankungen aufweisen kann, die sich von Schwankungen des anderen Teilzwischenkreises, falls der überhaupt Schwankungen hat, unterscheidet, nämlich Schwankungen in der Amplitude der jeweiligen Zwischenkreisspannung.

Durch die Zwischenkreisschaltvorrichtung ist es dabei möglich, eine solche Aufteilung in einem ersten und zweiten Teilzwischenkreis variabel zu gestalten. In dem genannten Beispiel von 7 Wechselrichtern für den ersten Teilzwischenkreis und 3 Wechselrichtern für den zweiten Teilzwischenkreis kann die Aufteilung auch verändert werden, in dem bspw. der erste Teilzwischenkreis nach einer weiteren Betätigung der Zwischenkreisschaltvorrichtung 5 Wechselrichter umfasst und der zweite Teilzwischenkreis dann ebenfalls 5 Wechselrichter umfasst.

Eine solche Variabilität ist besonders für die Verwendung der Wechselrichteranordnung für ein regeneratives Erzeugersystem vorgesehen, dass wenigstens ein Windenergiesystem und eine Photovoltaikanlage umfasst. Das Windenergiesystem kann eine Windenergieanlage oder mehrere Windenergieanlagen aufweisen. Die Photovoltaikanlage kann auch aus mehreren einzelnen Photovoltaikeinzelanlagen zusammengesetzt sein. Speist das Windenergiesystem auf den ersten Teilzwischenkreis und die Photovoltaikanlage auf den zweiten Teilzwischenkreis, so kann abhängig der jeweils erzeugten Leistung die Aufteilung der Wechselrichter zwischen erstem und zweitem Teilzwischenkreis vorgenommen werden.

Ist also der Wind stark und die Sonneneinstrahlung schwach, kommt das erste Beispiel in Betracht, bei dem 7 Wechselrichter bzw. ihre Gleichspannungszwischenkreise zu dem ersten Teilzwischenkreis zusammengeschaltet sind und die verbleibenden 3 Wechselrichter bzw. ihre Gleichspannungszwischenkreise zu dem zweiten Teilzwischenkreis zusammengeschaltet sind. Hier wurde besonders erkannt, dass Windenergiesysteme und Photovoltaikanlagen, die in der Nähe zueinander aufgestellt sind, selten gleichzeitig eine hohe Leistung erzeugen. Stattdessen besteht zwischen beiden Systemen häufig eine Antikorrelation, demnach ein wolkenloser Himmel mit starken Sonneneinstrahlung selten bei gleichzeitig starkem Wind auftritt, wohingegen starker Wind häufig zusammen mit erheblicher Wolkenbildung auftritt, so dass dann die Sonneneinstrahlung eher schwach ist.

Es wurde auch erkannt, dass moderne Windenergieanlagen so arbeiten, dass elektrische Leistung mit einem Synchrongenerator erzeugt, gleichgerichtet und dann als gleichgerichteter Strom einem Gleichspannungszwischenkreis zugeführt wird. Ebenfalls wurde erkannt, dass Photovoltaikanlagen auch einen Gleichstrom erzeugen und einen Gleichspannungszwischenkreis zur Verfügung stellen. In beiden Fällen kann dann ausgehend von dem jeweiligen Gleichspannungszwischenkreis mittels eines Wechselrichters ein Wechselstrom erzeugt werden.

Trotz ähnlicher Spannungsamplituden beider Gleichspannungszwischenkreise können sich die Spannungen und/oder Spannungsverläufe solcher Gleichspannungszwischenkreise dennoch unterscheiden. Besonders kommt bei einer Photovoltaikanlage in Betracht, dass ihr Arbeitspunkt über die Spannungshöhe am Gleichspannungszwischenkreis eingestellt wird oder zumindest die Spannungshöhe am Gleichspannungszwischenkreis von einer Gleichspannung abhängt, die zum Einstellen des Arbeitspunktes der Photovoltaikanlage gewählt wurde. Hier liegt besonders die Erkenntnis zugrunde, dass eine Photovoltaikanlage ständig ihren Arbeitspunkt gemäß eines sog. MPP-Tracking-Verfahrens einstellt. Ein solches Verfahren bezeichnet die technische Vorgehensweise, demnach quasi ständig nach einem maximalen Arbeitspunkt gesucht wird, also einem Arbeitspunkt, bei dem maximale Leistung erzeugt werden kann. Besonders kann das Auswirkungen auf den Spannungsverlauf im entsprechenden Gleichspannungszwischenkreis des nachgelagerten Wechselrichters haben. Entsprechend ergibt sich dazu ein Unterschied zu einem Gleichspannungszwischenkreis eines Wechselrichters, der von einem Generator einer Windenergieanlage gespeist wird.

Es wurde auch erkannt, dass der einzelne Wechselrichter gegen solche unterschiedlichen Spannungshöhen tolerant ist. Grundsätzlich erzeugt ein Wechselrichter aus der Gleichspannung eines Gleichspannungszwischenkreises einen Wechselstrom mit einer gewissen Wechselspannungsamplitude. Durch diese Wechselspannungsamplitude ist auch der Spannungsbereich für den Gleichspannungszwischenkreis festgelegt. Solange die Spannungshöhe des Gleichspannungszwischenkreises aber innerhalb dieses festgelegten Bereichs ist, stellen Spannungsschwankungen, also Spannungsschwankungen innerhalb dieses Bereichs, kein Problem für den Wechselrichter dar, und der Wechselrichter kann sich auf solche Variationen einstellen und bspw. durch ein angepasstes Pulsverhalten reagieren.

Insbesondere wird vorgeschlagen, dass jeder Wechselrichter mit einem Toleranzbandverfahren arbeitet. Bei einem solchen Toleranzbandverfahren wird für den zu erzeugenden Ausgangsstrom ein Toleranzband vorgegeben, in dem sich der erzeugte Strom befinden soll. Stößt der erzeugte Strom an eine der beiden Toleranzbandgrenzen, die nämlich das Toleranzband definieren, so wird in dem Wechselrichter entsprechend geschaltet. Dadurch wird bei einem Toleranzbandverfahren das entsprechende Pulsmuster generiert. Das Toleranzbandverfahren ist insoweit eine Regelung, bei der das Schaltverhalten des Wechselrichters immer abhängig von dem erzeugten Strom und zwar immer bezogen auf die Augenblickswerte, nachgeführt wird.

Dazu wurde erkannt, dass dann, wenn sich die Spannung im Gleichspannungszwischenkreis verändert sich dies aufgrund der unmittelbaren und sofortigen Messung des erzeugten Ausgangsstroms sofort im Schaltverhalten wiederspiegelt, der erzeugte Strom aber weiterhin so erzeugt wird, dass er im Toleranzband liegt.

Davon ausgehend wurde somit erkannt, dass die Gleichspannungszwischenkreis jedes Wechselrichters sowohl für den Betrieb mit einem Windenergiesystem als auch für den Betrieb mit einer Photovoltaikanlage geeignet sind. Die Unterschiede, die sich zwischen dem Windenergiesystem und der Photovoltaikanlage ergeben, sind allerdings insoweit zu berücksichtigen, als dass die jeweils erzeugten Gleichspannungen galvanisch voneinander getrennt sein sollten. Das wird durch die Zwischenkreisschaltvorrichtung erreicht. Durch sie kann auch erreicht werden, dass bedarfsabhängig, nämlich abhängig davon, wieviel Windleistung aktuell verfügbar ist im Vergleich zu wieviel Leistung aus Sonneneinstrahlung aktuell verfügbar ist, entsprechend mehr oder weniger Wechselrichter mit dem Windenergiesystem verbunden werden und entsprechend mehr oder weniger viele Wechselrichter mit der Photovoltaikanlage verbunden werden.

Durch die Zwischenkreisschaltvorrichtung kann somit eine leistungsabhängige Aufteilung zwischen Windenergiesystem einerseits und Photovoltaikanlage andererseits auf einfache Art und Weise geschaffen werden. Allein das variable Bilden des ersten und zweiten Teilzwischenkreises schafft die Möglichkeit, eine entsprechende Wechselrichterkapazität für das Windenergiesystem bzw. die Photovoltaikanlage bereitzustellen.

Somit wird vorgeschlagen, die Gleichspannungszwischenkreise der Wechselrichter in einen ersten und einen zweiten Teilzwischenkreis aufzuteilen. Als Erweiterung kommt aber auch in Betracht, dass über einen dritten Teilzwischenkreis ein Energiespeicher, besonders eine Batterie, mit eingebunden werden kann. Außerdem kommt in Betracht, auch noch einen vierten Teilzwischenkreis auf die gleiche Art und Weise zu schaffen, wenn bspw. außerdem über den Gleichspannungszwischenkreis ein Verbraucher versorgt werden soll. Insoweit kommt auch in Betracht, dass jeder Wechselrichter bidirektional arbeitet, also nicht nur aus seinem Gleichspannungszwischenkreis einen Wechselstrom erzeugt, sondern auch einen Wechselstrom in einen Gleichstrom wandeln und in den Gleichspannungszwischenkreis einspeisen kann. Das kommt dann in Betracht, wenn besonders für eine Netzstützungsmaßnahme elektrische Leistung aus dem elektrischen Versorgungsnetz entnommen werden soll.

Gemäß einer Variante kann aber vorgesehen sein, dass nur insgesamt drei Teilzwischenkreise verwendet werden und der genannte Energiespeicher kann somit als zusätzlicher Erzeuger und alternativ zusätzlicher Verbraucher verwendet werden und beides kann an einem Teilzwischenkreis, insbesondere an dem genannten dritten Teilzwischenkreis realisiert werden.

Gemäß einer Ausführungsform wird vorgeschlagen, dass Wechselrichter, deren Gleichspannungszwischenkreis mit dem ersten Teilzwischenkreis verbunden sind, zu einer Wechselrichterteilanordnung zusammengefasst werden, um einen ersten Teilwechselstrom zu erzeugen, und dass Wechselrichter, deren Gleichspannungszwischenkreis mit dem zweiten Teilzwischenkreis verbunden sind, zu einer zweiten Wechselrichterteilanordnung zusammengefasst werden, um einen zweiten Teilwechselstrom zu erzeugen, wobei der erste und zweite Teilwechselstrom zum Einspeisen in ein elektrisches Versorgungsnetz zu einem Gesamtwechselstrom zusammengeführt werden und wenigstens mittels der Zwischenkreisschaltvorrichtung Wechselrichter wahlweise der ersten oder zweiten Wechselrichteranordnung zugeordnet werden können.

Diese Ausführungsform realisiert noch besser die vorstehend erläuterten Möglichkeiten, die vielen Wechselrichter bedarfsabhängig zwischen einem Windenergiesystem und einer Photovoltaikanlage aufzuteilen. Vorzugsweise werden immer entsprechend so viele Wechselrichter zu einer ersten Wechselrichterteilanordnung zusammengefasst, wie zum Erzeugen und Einspeisen eines Wechselstroms für das Windenergiesystem benötigt wird, wohingegen entsprechend viele bzw. wenige Wechselrichter zur zweiten Wechselrichterteilanordnung zusammengefasst werden, um die von der Photovoltaikanlage erzeugte Leistung in einen Wechselstrom zu wandeln und zum Einspeisen in das elektrische Versorgungsnetz vorzubereiten.

Die Zuordnung kann wahlweise erfolgen und das erfolgt besonders abhängig von der der ersten bzw. zweiten Wechselrichterteilanordnung zugeführten oder zur Verfügung stehenden, einzuspeisenden elektrischen Leistung.

Gemäß einer Ausführungsform wird vorgeschlagen, dass die Wechselstromausgänge der Wechselrichter, zumindest die Wechselstromausgänge von Wechselrichtern unterschiedlicher Wechselrichterteilanordnungen, galvanisch voneinander getrennt sind. Dadurch kann eine Betriebssicherheit gewährleistet werden und/oder es können Querströme oder Kreisströme vermieden werden die andernfalls, bspw. über ein Erdpotenzial, auftreten könnten. Dadurch, dass die Wechselstromausgänge galvanisch untereinander getrennt sind, kann ein eigenständiges Arbeiten der Wechselrichter voneinander gewährleistet werden. Es kann aber ausreichen, dass nur eine galvanische Trennung zwischen den Wechselrichtern der ersten Wechselrichteranordnung einerseits und den Wechselrichtern der zweiten Wechselrichteranordnung andererseits gewährleistet wird. Es kommt aber in Betracht, dass, bspw. durch einen einzelnen Transformator am Ausgang jedes Wechselrichters, jeder Wechselrichter an seinem Wechselstromausgang von allen anderen Wechselrichtern bzw. mehreren Wechselstromausgängen galvanisch getrennt ist. Es kommt auch in Betracht, dass ein Transformator eingangsseitig, bzw. an seiner Primärseite, eine Wicklung für jeden Wechselrichter aufweist. Beide Varianten hätten den Vorteil, dass bei einer Veränderung der Zuordnung der Wechselrichter zur ersten und/oder zweiten Wechselrichteranordnung eine solche galvanische Trennung nicht angepasst zu werden braucht.

Besonders die Variante, einen Transformator mit jeweils einer Wicklung für jeden Wechselrichter, nämlich für jeden Wechselrichterausgang, vorzusehen, kann eine kostengünstige Lösung sein, bei der nämlich jede Wicklung nur auf den jeweiligen Wechselrichter ausgelegt zu sein braucht. Das hat gegenüber der Variante, nur eine galvanische Trennung zwischen den Wechselrichtern der ersten Wechselrichteranordnung einerseits und den Wechselrichtern der zweiten Wechselrichteranordnung andererseits vorzusehen, den Vorteil, dass der Transformator eingangsseitig gezielt dimensioniert werden kann.

Für eine galvanische Trennung nur zwischen den Wechselrichtern der ersten Wechselrichteranordnung einerseits und den Wechselrichtern der zweiten Wechselrichteranordnung andererseits kann ein Transformator mit eingangsseitig nur zwei getrennten Wicklungen vorgesehen sein. Ein Transformator mit solchen zwei eingangsseitigen Wicklungen ist mit vergleichsweise geringem Aufwand herstellbar, die eingangsseitigen Wicklungen müssen aber vorsorglich groß dimensioniert sein, weil die Größe der ersten und zweiten Wechselrichteranordnung variieren kann. Andererseits kann das Vorsehen besonders einer entsprechenden Schalteranordnung, um eine galvanische Trennung zwischen den einzelnen Wechselrichterteilanordnungen zu gewährleisten, konstruktiv einfach und mit geringem Kostenaufwand umgesetzt werden.

Besonders wird vorgeschlagen, dass die Wechselrichter, zumindest die Wechselrichter der unterschiedlichen Wechselrichteranordnungen, so an einen Transformator mit wenigstens zwei Primärwicklungen angeschlossen sind, dass ihre Wechselströme in dem Transformator zu einem gemeinsamen Wechselstrom überlagert werden. Hier kommt besonders in Betracht, dass lediglich eine galvanische Trennung zwischen den beiden Wechselrichterteilanordnungen vorgesehen ist. Im Ergebnis können dann zwei Teilwechselströme ausgegeben werden, die zueinander galvanisch getrennt sind. Diese können dann in eine erste und zweite Primärwicklung eines Transformators eingegeben werden und in diesem Transformator überlagert werden. Der Transformator kann dann eine einzelne sekundärseitige Wicklung und damit einen einzigen sekundärseitigen Ausgang aufweisen, an dem dann ein Gesamtstrom erzeugt bzw. ausgegeben werden kann, um diesen dann in das elektrische Versorgungsnetz einzuspeisen.

Grundsätzlich kommt auch in Betracht, dass ein solcher Transformator mehr als zwei Primärwicklungen aufweist, was allerdings technisch aufwendig sein kann.

Gemäß einer Ausgestaltung wird vorgeschlagen, dass die Wechselrichteranordnung eine Ausgangsstromschaltvorrichtung aufweist, die dazu eingerichtet ist, Wechselstromausgänge mehrerer Wechselrichter elektrisch zu verbinden oder zu trennen, um einen ersten und einen zweiten Teilstromausgang zu bilden, und die Wechselstromausgänge der Wechselrichter jeweils wahlweise mit dem ersten oder zweiten Teilstromausgang galvanisch zu verbinden, wobei der erste und der zweite Teilstromausgang durch die Ausgangsstromschaltvorrichtung galvanisch voneinander getrennt sind. Insbesondere ist vorgesehen, dass die Ausgangsstromschaltvorrichtung mit der Zwischenkreisschaltvorrichtung synchronisiert ist, also dass der erste Teilstromausgang der ersten Wechselrichteranordnung zugeordnet ist und der zweite Teilstromausgang der zweiten Wechselrichterteilanordnung zugeordnet ist.

Vorzugsweise ist auch hier der beschriebene Transformator mit wenigstens zwei Primärwicklungen vorgesehen, wobei der erste Teilstromausgang der ersten Primärwicklung und der zweite Teilstromausgang mit der zweiten Primärwicklung verbunden sind, um die beiden Teilausgangsströme erst in dem Transformator zu überlagern.

Die beschriebene galvanische Trennung der Wechselstromausgänge bzw. die beschriebene galvanische Zusammenfassung der Wechselstromausgänge kann durch diese Ausgangsstromschaltvorrichtung erreicht werden. Durch die vorgeschlagene Synchronisierung zwischen der Ausgangsstromschaltvorrichtung und der Zwischenkreisschaltvorrichtung werden Wechselrichter sowohl an ihrem Gleichspannungszwischenkreis als auch an ihrem Wechselstromausgang einer der Wechselrichteilanordnungen zugeordnet. In beiden Fällen kann eine galvanische Verbindung zu der Wechselrichterteilanordnung hergestellt werden, zu der sie neu zugeordnet werden, und eine galvanische Trennung zu der Wechselrichterteilanordnung hergestellt werden, zu der der Wechselrichter zuvor zugeordnet war.

Grundsätzlich kommt auch hier in Betracht, dass eine dritte und noch weitere Wechselrichterteilanordnungen vorgesehen sind und auch diese mittels einer entsprechenden Ausgangsstromschaltvorrichtung im Bereich ihrer Wechselstromausgänge entsprechend geschaltet werden.

Erfindungsgemäß wird vorgeschlagen, dass der erste Teilzwischenkreis einen Windenergieanschluss aufweist, zum Verbinden mit einem Windenergiesystem, um darüber von dem Windenergiesystem erzeugte elektrische Leistung zu erhalten, und dass der zweite Teilzwischenkreis einen Photovoltaikanschluss aufweist, zum Verbinden mit einer Photovoltaikanlage, um darüber von der Photovoltaikanlage erzeugte elektrische Leistung zu erhalten. Dazu wird vorgeschlagen, dass die Wechselrichteranordnung dazu vorbereitet ist, dass sich die Zwischenkreisspannung zwischen dem ersten und zweiten Teilzwischenkreis unterscheiden. Insbesondere wird vorgeschlagen, dass an dem zweiten Teilzwischenkreis eine Zwischenkreisspannung in Abhängigkeit eines Arbeitspunktes der Photovoltaikanlage eingestellt wird.

Über diese beiden Anschlüsse, also den Windenergieanschluss und den Photovoltaikanschluss kann die Wechselrichteranordnung somit gleichzeitig mit einem Windenergiesystem und einer Photovoltaikanlage verbunden werden. Die Wechselrichteranordnung kann dann gleichzeitig die Leistung beider Energieerzeuger in das elektrische Versorgungsnetz einspeisen. Als Windenergiesystem wird hier eine einzelne Windenergieanlage oder mehrere Windenergieanlagen bezeichnet, die über denselben Netzanschlusspunkt in das elektrische Versorgungsnetz einspeisen. Hierunter kann auch ein Windpark fallen.

Die Zwischenkreisspannungen können sich dabei zwischen dem ersten und zweiten Teilzwischenkreis unterscheiden und das kann besonders dadurch erreicht werden, dass die Teilzwischenkreise galvanisch voneinander getrennt sind. Darüber hinaus wird vorgeschlagen, dass die Wechselrichter gegenüber Variationen der Zwischenkreisspannungen an ihrem Gleichspannungszwischenkreis tolerant sind. Dadurch kann die Wechselrichteranordnung dazu vorbereitet sein, dass sich die Zwischenkreisspannungen zwischen dem ersten und zweiten Teilzwischenkreis unterscheiden. Die genannte galvanische Trennung lässt solche Unterschiede zu und die Wechselrichter sind gegenüber solchen Spannungsschwankungen tolerant. Eine Möglichkeit, dass ein Wechselrichter gegenüber Spannungsschwankungen am Gleichspannungszwischenkreis tolerant ist, kann dadurch realisiert werden, dass der Wechselrichter nach dem Toleranzbandverfahren arbeitet und/oder die Wechselrichter so dimensioniert sind, dass auch bei einer Spannungsvariabilität immer ein ausreichend großer Strom ins Netz eingespeist werden kann.

Vorzugsweise wird dadurch, dass die beiden Zwischenkreisspannung sich voneinander unterscheiden können, ermöglicht, dass der zweite Teilzwischenkreis seine Zwischenkreisspannung so einstellt, dass dadurch ein gewünschter Arbeitspunkt in der Photovoltaikanlage gefunden wird. Insbesondere kann mittels der Zwischenkreisspannung des zweiten Teilzwischenkreises ein sog. MPP-Tracking-Verfahren für die Photovoltaikanlage durchgeführt werden. Es kommt aber auch in Betracht, dass dieses MPP-Tracking-Verfahren an der Photovoltaikanlage selbst und nicht in dem zweiten Teilzwischenkreis durchgeführt wird, dass aber resultierende Spannungsvariationen an der Photovoltaikanlage auch zu Variationen der Zwischenkreisspannung an dem zweiten Teilzwischenkreis führen.

Gemäß einer Variante weist die Photovoltaikanlage einen zusätzlichen Zwischenkreis auf, der über einen Gleichstromsteller, der auch als DC/DC-Wandler bezeichnet wird, mit dem zweiten Teilzwischenkreis verbunden ist. Das hat den Vorteil, dass die Zwischenkreisspannung am zweiten Teilzwischenkreis entsprechend der Netzspannung und des Blindleistungsbedarfs eingestellt werden kann. Dabei kann auch für diese Variante die galvanische Trennung zwischen dem ersten und zweiten Teilzwischenkreis gewährleistet werden. Dadurch kann der DC/DC-Wandler kostengünstig ohne galvanische Trennung ausgebildet sein.

Erfindungsgemäß wird vorgeschlagen, dass das Windenergiesystem und die Photovoltaikanlage, die nämlich an dem Windenergieanschluss bzw. dem Photovoltaikanschluss mit der Wechselrichteranordnung verbunden werden, jeweils durch eine Nennleistung gekennzeichnet sind. Eine solche Kennzeichnung durch eine Nennleistung ist üblich und eine solche Nennleistung kann regelmäßig auch eine Maximalleistung des jeweiligen Systems darstellen, die in einem Normalbetrieb nicht überschritten werden soll. Diese beiden Nennleistungen können zwar theoretisch gleich sein, meist werden sie aber unterschiedlich sein, weil das Windenergiesystem und die Photovoltaikanlage meist unabhängig voneinander ausgelegt werden. Vorzugsweise wird davon ausgegangen, dass die Nennleistung der Photovoltaikanlage kleiner als die des Windenergiesystems ist.

Erfindungsgemäß wirdvorgeschlagen, dass die Wechselrichteranordnung eine Nennleistung aufweist, die der Nennleistung des Windenergiesystems zzgl. einer Reserveleistung entspricht. Die Wechselrichteranordnung wird also basierend auf der Nennleistung des Windenergiesystems ausgelegt. Das bedeutet besonders, dass jeder Wechselrichter eine Nennleistung aufweist, die er im Normalbetrieb maximal von Gleichstrom in Wechselstrom umwandeln kann, wobei die Nennleistung der Wechselrichteranordnung dann die Summe aller Nennleistungen der Wechselrichter ist. Vorzugsweise sind alle Wechselrichter gleich dimensioniert und die Nennleistung der Wechselrichteranordnung entspricht dann der Nennleistung eines Wechselrichters multipliziert mit der Anzahl vorhandener Wechselrichter.

Die Auslegung der Wechselrichteranordnung kann auch die Auslegung eines Transformators, insbesondere Hochspannungstransformators beinhalten, der ebenfalls auf die Nennleistung der Wechselrichteranordnung ausgelegt wird.

Erfindungsgemäß wird vorgeschlagen, dass die Nennleistung der Wechselrichteranordnung der Nennleistung des Windenergiesystems zzgl. einer Reserveleistung entspricht. Die Reserveleistung kann auch den Wert 0 betragen, weist vorzugsweise aber einen größeren Wert auf, der bis zu 20 % oder zumindest bis zu 10 % der Nennleistung des Windenergiesystems betragen kann. Somit wird die Wechselrichteranordnung nur geringfügig größer als das Windenergiesystem ausgelegt.

Dem liegt besonders der Gedanke zugrunde, dass eine solche Auslegung ausreichen kann und es nicht erforderlich ist, die Nennleistung der Wechselrichteranordnung auf die Summe der Nennleistungen des Windenergiesystems und der Photovoltaikanlage auszulegen.

Durch die erkannte Antikorrelation zwischen verfügbarer Windleistung und verfügbarer Sonnenleistung wurde auch erkannt, dass eine Auslegung der Wechselrichteranordnung auf die Nennleistung des Windenergiesystems, ggf. nur um die Reserveleistung erhöht, in den meisten Fällen ausreichend sein kann. Somit kann auch erreicht werden, dass insgesamt weniger Wechselrichterkapazität zur Verfügung gestellt werden muss, als dies der Fall wäre, wenn für das Windenergiesystem einerseits und die Photovoltaikanlage andererseits jeweils eine ausreichende Wechselrichteranordnung bereitgestellt werden würde.

Erfindungsgemäß wird vorgeschlagen, dass die Reserveleistung einem Wert entspricht, der kleiner als die Nennleistung der Photovoltaikanlage ist, insbesondere kleiner als 50 % der Nennleistung der Photovoltaikanlage. Entsprechend kann Wechselrichterkapazität in Höhe von 50 % der Nennleistung der Photovoltaikanlage oder mehr eingespart werden.

Erfindungsgemäß wird auch eine regenerative Energieerzeugungsanlage vorgeschlagen zum Einspeisen elektrischer Leistung in elektrisches Versorgungsnetz. Eine solche regenerative Energieerzeugungsanlage umfasst ein Windenergiesystem zum Erzeugen elektrischer Leistung aus Wind und eine Photovoltaikanlage zum Erzeugen elektrischer Energie aus Sonnenstrahlung. Außerdem ist eine Wechselrichteranordnung gemäß einer vorstehend beschriebenen Ausführungsform vorgesehen. Das Windenergiesystem und die Photovoltaikanlage sind somit an diese Wechselrichteranordnung, die somit auch als gemeinsame Wechselrichteranordnung bezeichnet werden kann, angeschlossen. Das Windenergiesystem erzeugt somit Leistung aus Wind und speist diese über einen Windenergieanschluss in den ersten Teilzwischenkreis ein, und die Photovoltaikanlage erzeugt elektrische Leistung aus Sonnenstrahlung und speist diese über den Photovoltaikanschluss in den zweiten Teilzwischenkreis ein. Je nach verfügbarer Leistung aus Wind und verfügbarer Leistung aus Sonnenstrahlung kann die Zwischenkreisschaltvorrichtung dem ersten oder zweiten Teilzwischenkreis mehr Wechselrichter zuordnen. Die Wechselrichteranordnung kann dadurch ausgenutzt werden und Unterschiede in der Gleichspannung, die einerseits durch das Windenergiesystem bereitgestellt wird und die andererseits durch die Photovoltaikanlage bereitgestellt wird, können auf einfache Art und Weise berücksichtigt werden.

Vorzugsweise wird vorgeschlagen, dass die regenerative Energieerzeugungsanlage eine Steuereinrichtung zum Steuern der Wechselrichteranordnung aufweist, um die Wechselrichteranordnung in Abhängigkeit von momentan aus Wind erzeugbare Leistung und momentan aus Sonnenstrahlung erzeugbare Leistung zu steuern. Besonders ist vorgesehen, dass zumindest die Zwischenkreisschaltvorrichtung abhängig dieser beiden verfügbaren Leistungen gesteuert wird, nämlich so, dass davon abhängig dem Windenergiesystem und der Photovoltaikanlage jeweils entsprechend viele Wechselrichter zugeordnet werden.

Somit wird vorgeschlagen, dass das Windenergiesystem über den Windenergieanschluss an den ersten Teilzwischenkreis angeschlossen ist und die Photovoltaikanlage über den Photovoltaikanschluss an den zweiten Teilzwischenkreis angeschlossen ist. Somit kann dem Windenergiesystem und der Photovoltaikanlage jeweils die geeignete Anzahl an Wechselrichtern zugeordnet werden.

Vorzugsweise ist ein Energiespeicher vorgesehen, um elektrische Energie zu speichern oder abzugeben. Außerdem oder alternativ ist ein elektrischer Verbraucher vorgesehen, um elektrische Energie zu verbrauchen. Dazu ist dann vorgesehen, dass die Zwischenkreisschaltvorrichtung dazu eingerichtet ist, einen dritten und optional, also falls notwendig, einen vierten Teilzwischenkreis zu bilden. Die Wechselrichter werden dann also in drei oder vier Gruppen aufgeteilt, nämlich in drei oder vier Wechselrichterteilanordnungen. Deren Größe und damit auch die Größe des jeweiligen Teilzwischenkreises kann je nach umzusetzender Leistung ausgewählt werden. Durch die Zwischenkreisschaltvorrichtung können dann zumindest diese Teilzwischenkreise gebildet werden. Außerdem oder alternativ kann die Aufteilung in die Wechselrichterteilanordnungen durch die Ausgangsstromschaltvorrichtung unterstütz werden.

Davon ausgehend ist dann vorgesehen, dass der Energiespeicher an den dritten Teilzwischenkreis angeschlossen ist und der elektrische Verbraucher, der also zusätzlich zu dem Energiespeicher vorgesehen ist, an den vierten Teilzwischenkreis angeschlossen ist. Bei der Variante, dass nur ein elektrischer Verbraucher, aber kein Energiespeicher vorhanden ist, wird der elektrische Verbraucher sinnvollerweise an den dritten Teilzwischenkreis angeschlossen und ein vierter Teilzwischenkreis braucht dann nicht gebildet zu werden.

Dadurch kann auf einfache Art und Weise ein elektrischer Energiespeicher und/oder elektrischer Verbraucher mit in die Energieerzeugungsanlage integriert werden. Dadurch kann durch den Energiespeicher eine Energiepufferung vorgenommen werden, besonders dann, wenn mehr regenerative Leistung vorhanden ist, als im elektrischen Versorgungsnetz Bedarf besteht, und diese kann in dem Energiespeicher zwischengespeichert werden.

Die Umsetzung kann auf einfache Art und Weise mittels der entsprechend angepassten Wechselrichteranordnung durchgeführt werden. Dadurch wird vermieden, dass für den Energiespeicher zusätzliche Wechselrichterkapazitäten zur Verfügung gestellt werden muss. Zumindest kann erreicht werden, dass weniger Wechselrichterkapazitäten zur Verfügung gestellt werden müssten, als dies der Fall wäre, wenn für den Energiespeicher eine eigene Wechselrichteranordnung vorgesehen wurde.

Auf gleiche Art und Weise kann ein elektrischer Verbraucher in die Energieerzeugungsanlage integriert werden. Ein solcher elektrischer Verbraucher kann gesonderte Aufgaben erfüllen, wie bspw. die Steuereinrichtung mit Strom zu versorgen. Der elektrische Verbraucher kann aber auch dazu vorgesehen sein, zur Netzstützung ein auftretendes Leistungsüberangebot abzubauen.

Jedenfalls können dadurch elektrische Speicher und Verbraucher, die auch als Lasten bezeichnet werden können, auf einfache Art und Weise in die regenerative Energieerzeugungsanlage integriert werden.

Besonders kann die regenerative Energieerzeugungsanlage als Windpark mit integrierter Photovoltaikanlage ausgebildet sein. Das ist für sämtliche vorstehend beschriebene Ausführungsformen ein Vorschlag.

Erfindungsgemäß wird auch ein Verfahren gemäß Anspruch 11 zum Steuern einer regenerativen Erzeugungsanlage vorgeschlagen. Die regenerative Erzeugungsanlage ist so ausgebildet, wie gemäß wenigstens einer Ausführungsform vorstehend erläutert wurde. Sie weist zudem eine Wechselrichteranordnung auf, die so ausgebildet ist, wie vorstehend gemäß wenigstens einer entsprechenden Ausführungsform erläutert wurde.

Das Verfahren arbeitet zudem so, wie im Zusammenhang mit wenigstens einer Ausführungsform der Wechselrichteranordnung und/oder im Zusammenhang mit der regenerativen Energieerzeugungsanlage erläutert wurde.

Besonders ist vorgesehen, dass das Verfahren auf einer Steuereinrichtung der regenerativen Energieerzeugungsanlage implementiert ist.

Es wird besonders vorgeschlagen, dass das Verfahren die Wechselrichteranordnung in Abhängigkeit von momentan aus Wind erzeugbare Leistung und momentan aus Sonnenstrahlung erzeugbare Leistung steuert. Insbesondere wird die Zwischenkreisschaltvorrichtung in Abhängigkeit von momentan aus Wind erzeugbarer Leistung in Abhängigkeit von momentan aus Sonnenstrahlung erzeugbare Leistung gesteuert. Dafür kann die Steuereinrichtung entsprechende Schaltbefehle an die Zwischenkreisschaltvorrichtung geben, um dadurch wahlweise die entsprechenden Teilzwischenkreise zu bilden bzw. zu verändern.

Dafür werden Gleichspannungszwischenkreise einzelner Wechselrichter jeweils einem Teilzwischenkreis zugeordnet, insbesondere dem ersten oder dem zweiten. Für eine Veränderung der Teilzwischenkreise kommt besonders in Betracht, dass die Steuerung der Zwischenkreisschaltvorrichtung Steuerbefehle gibt, um wenigstens einen Wechselrichter bzw. seinen Gleichspannungszwischenkreis von dem einen Teilzwischenkreis zu trennen, und mit dem anderen Teilzwischenkreis zu verbinden.

Die Erfindung wird nun nachfolgend anhand von Ausführungsformen unter Bezugnahme auf die begleitenden Figuren exemplarisch näher erläutert. Der Schutzumfang der Erfindung wird durch die unabhängigen Ansprüche definiert.
- Figur 1: zeigt eine Windenergieanlage in einer perspektivischen Darstellung.
- Figur 2: zeigt eine regenerative Energieerzeugungsanlage gemäß einer ersten Ausführungsform in einer schematischen Darstellung.
- Figur 3: zeigt eine regenerative Energieerzeugungsanlage gemäß einer zweiten Ausführungsform in einer schematischen Darstellung.

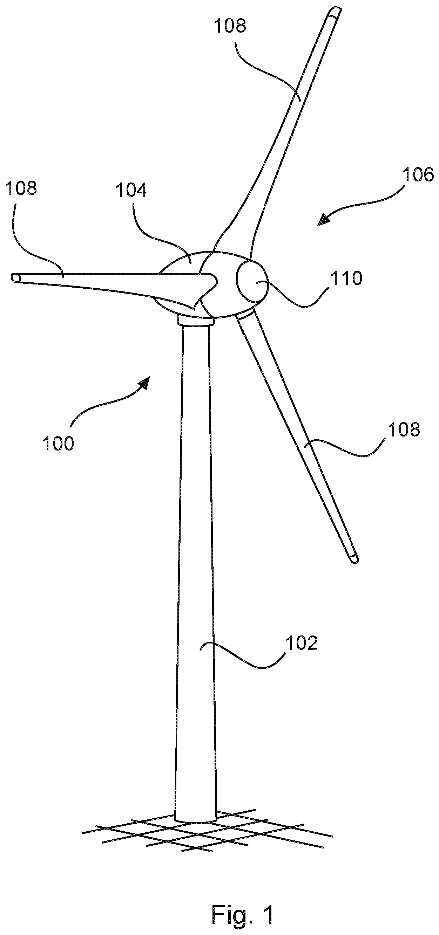

Figur 1 zeigt eine Windenergieanlage 100 mit einem Turm 102 und einer Gondel 104. An der Gondel 104 ist ein Rotor 106 mit drei Rotorblättern 108 und einem Spinner 110 angeordnet. Der Rotor 106 wird im Betrieb durch den Wind in eine Drehbewegung versetzt und treibt dadurch einen Generator in der Gondel 104 an.

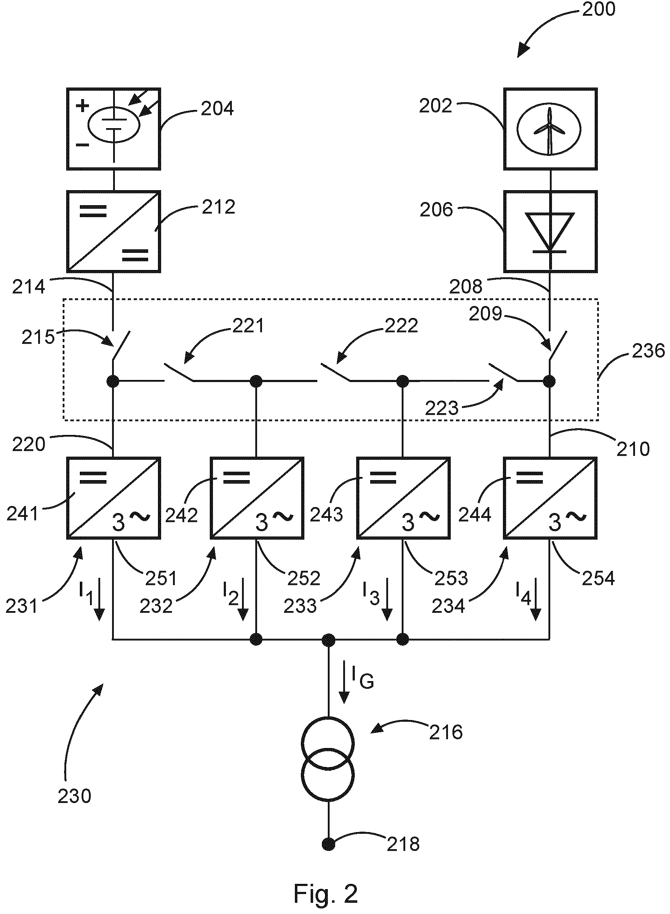

Figur 2 zeigt eine regenerative Erzeugungsanlage 200 mit einem Windenergiesystem 202 und einer Photovoltaikanlage 204. Das Windenergiesystem 202 ist hier als einzelne Windenergieanlage veranschaulicht, die repräsentativ auch für andere Windenergiesysteme steht, wie bspw. einen Windpark. Das Windenergiesystem 202 speist über einen Gleichrichter 206 und einen Windenergieanschluss 208 auf einen ersten Teilzwischenkreis 210. Gleichzeitig speist die Photovoltaikanlage 204 über einen Stromsteller 212, der als Hochsetzsteller und/oder Tiefsetzsteller ausgebildet sein kann, über einen Photovoltaikanschluss 214 auf einen zweiten Teilzwischenkreis 220. Der Stromsteller 212 kann dabei optional sein und es kommt auch in Betracht, dass die Photovoltaikanlage 204 unmittelbar an den zweiten Teilzwischenkreis 220 angeschlossen ist.

Der erste Teilzwischenkreis 210 und der zweite Teilzwischenkreis 220 sind Teil einer Wechselrichteranordnung 230, die gemäß Figur 2 exemplarisch einen ersten bis vierten Wechselrichter 231 bis 234 aufweist. Auch der Windenergieanschluss 208 und der Photovoltaikanschluss 214 sind als Teil, besonders als Eingangsanschlüsse der Wechselrichteranordnung 230 anzusehen. Weiterhin weist die Wechselrichteranordnung 230 eine Zwischenkreisschaltvorrichtung 236 auf.

Jeder Wechselrichter 231 bis 234 weist einen Gleichspannungszwischenkreis 241 bis 244 auf und diese Gleichspannungszwischenkreise können auch als erster bis vierter Gleichspannungszwischenkreis 241 bis 244 bezeichnet werden. Außerdem weist jeder Wechselrichter 231 bis 234 jeweils einen Wechselstromausgang 251 bis 254 auf und diese Wechselstromausgänge können auch zur besseren Unterscheidung als erster bis vierter Wechselstromausgang bezeichnet werden. Jeder dieser Wechselstromausgänge 251 bis 254 gibt jeweils einen Wechselstrom I₁ bis I₄ aus und diese Wechselströme werden zu einem Gesamtstrom I_{G} überlagert. Der Gesamtstrom I_{G} kann über einen Transformator 216 geführt und an einem Netzanschlusspunkt 218 in ein elektrisches Versorgungsnetz eingespeist werden. Der Transformator 216 kann als Teil der Wechselrichteranordnung 230 betrachtet werden, er kann aber auch je nach Ausführungsform, ein eigenständiges Element sein.

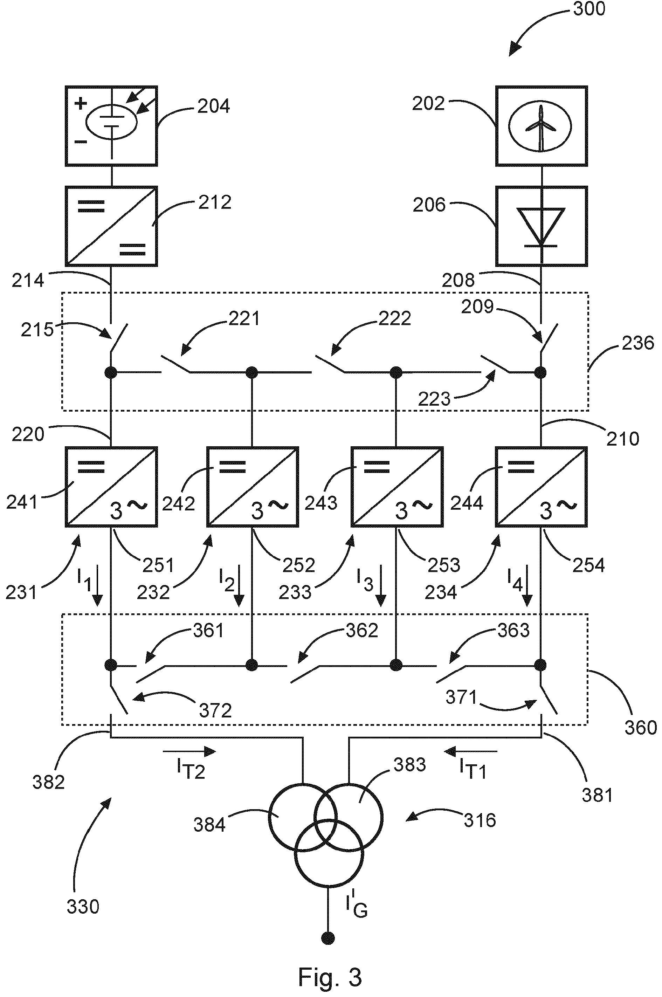

Die Wechselrichter 231 bis 234 sind, gleiches gilt für die Figur 3, nur exemplarisch gewählt und es kann besonders auch eine höhere Anzahl von Wechselrichtern vorhanden sein.

Im Betrieb der regenerativen Energieerzeugungsanlage 200 liefert das Windenergiesystem 202 und die Photovoltaikanlage 204 je nach Windbedingungen und Sonneneinstrahlung unterschiedlich viel Leistung und das wird mittels der Zwischenkreisschaltvorrichtung 236 berücksichtigt. Die Zwischenkreisschaltvorrichtung 236 weist dazu einen ersten, zweiten und dritten Kopplungsschalter 212 bis 223 auf. Zum Zwecke der Darstellung sind die drei Kopplungsschalter 221 bis 223 in Figur 2 geöffnet dargestellt, vorzugsweise ist aber nur einer dieser drei Kopplungsschalter geöffnet. Es wird darauf hingewiesen, dass bei einer Verwendung von mehr als vier Wechselrichter auch entsprechend mehr Kopplungsschalter vorgesehen sind. Außerdem ist ein Windenergieschalter 209 am Windenergieanschluss 208 und ein Photovoltaikschalter 215 am Photovoltaikanschluss 214 vorgesehen. Im laufenden Betrieb sind diese beiden Schalter geschlossen, wenn das Windenergiesystem 202 und die Photovoltaikanlage 204 Leistung einspeisen. Durch die Verwendung der Schaltvorrichtung 236, die unten noch weiter beschrieben wird, kann der Stromsteller 212, sofern er überhaupt vorgesehen ist, ohne galvanische Trennung vorgesehen bzw. ausgebildet sein.

Wird nun beispielhaft angenommen, dass aktuell wenig Sonneneinstrahlung aber viel Windenergie vorhanden ist, so können der zweite und dritte Kopplungsschalter 222, 223 geschlossen sein, währen der erste Kopplungsschalter 221 geöffnet bleibt. Dadurch bilden der zweite, dritte und vierte Gleichspannungszwischenkreis 242 bis 244 den ersten Teilzwischenkreis 210. Dadurch kann die Leistung, die durch das Windenergiesystem 202 aus Wind erzeugt wurde, in diesen ersten Teilzwischenkreis 210 eingespeist werden und mittels des zweiten, dritten und vierten Wechselrichters 232 bis 234 in einen Wechselstrom gewandelt werden. Dieser Wechselstrom ist dann nämlich die Summe der Ausgangsströme I₂ bis I₄.

Gleichzeitig bildet der erste Gleichspannungszwischenkreis 240, also der Gleichspannungszwischenkreis des ersten Wechselrichters 230, den zweiten Teilzwischenkreis 220. In dem exemplarischen Beispiel ist von wenig Sonnenstrahlung ausgegangen worden und somit ist die Verwendung dieses einen, ersten Wechselrichters 231 ausreichend, um die von der Photovoltaikanlage 204 erzeugte Leistung aus Sonnenstrahlung in einen Wechselstrom, nämlich hier der Strom I₁, umzuwandeln.

Ändert sich nun aber die Situation und nimmt die Sonneneinstrahlung zu und die aus Wind erzeugbare Leistung ab, so kann bspw. der zweite Kopplungsschalter 222 geöffnet und der erste Kopplungsschalter 221 geschlossen werden. In dem Fall bilden dann der erste und zweite Gleichspannungszwischenkreis 241 und 242 den zweiten Teilzwischenkreis und der dritte und vierte Gleichspannungszwischenkreis 243 und 244 bilden dann den ersten Teilzwischenkreis 210. Nimmt die verfügbare Windleistung noch weiter ab und die Sonnenstrahlung noch stärker zu, so kann der dritte Kopplungsschalter 223 geöffnet und der zweite Kopplungsschalter 222 geschlossen werden. Ist wenig Sonneneinstrahlung und wenig Windleistung verfügbar, so kommt auch in Betracht, dass einer der Wechselrichter, oder mehrere Wechselrichter, ungenutzt bleiben.

Figur 3 zeigt eine regenerative Energieerzeugungsanlage 300 mit Wechselrichteranordnung 330 gemäß einer weiteren Ausführungsform. Diese regenerative Energieerzeugungsanlage 300 der Figur 3 unterscheidet sich von der regenerativen Energieerzeugungsanlage 200 gemäß Figur 2 im Wesentlichen nur durch die Verwendung einer Ausgangsstromschaltvorrichtung 360 und einem veränderten Transformator 316 einschließlich resultierender elektrischer Verbindung zwischen der Ausgangsstromschaltvorrichtung 360 und dem Transformator 316. Für die übrigen Elemente werden daher dieselben Bezugszeichen wie in Figur 2 verwendet und für deren Funktionalität wird ebenfalls auf die Erläuterung zur Figur 2 verwiesen.

Durch die Ausgangsstromschaltvorrichtung 360 wird auch eine galvanische Trennung an den Wechselstromausgängen 251 bis 254 der Wechselrichter 231 bis 234 geschaffen. Das kann besonders durch die Ausgangskopplungsschalter 361 bis 363 erreicht werden. Durch diese Ausgangskopplungsschalter 361 bis 363 können die Wechselrichter 231 bis 234 ausgangsseitig verbunden bzw. getrennt werden. Der besseren Übersichtlichkeit halber sind die drei Ausgangskopplungsschalter 361 bis 363 geöffnet dargestellt. Im laufenden Betrieb ist aber, wenn alle vier Wechselrichter 231 bis 234 aktiv sind, nur einer der drei Ausgangskopplungsschalter 361 bis 363 geöffnet. Insbesondere wird vorgeschlagen, dass die Ausgangskopplungsschalter 361 bis 363 synchron mit den Kopplungsschaltern 221 bis 223 geschaltet werden und dadurch können abhängig von vorhandener Windenergie und abhängig von vorhandener Sonneneinstrahlung entsprechend viele der Wechselrichter 231 bis 234 dem Windenergiesystem 202 oder der Photovoltaikanlage 204 zugeordnet werden.

Außerdem ist ein Windenergieausgangsschalter 371 und ein Photovoltaikausgangsschalter 372 vorgesehen. Auch diese sind der besseren Übersichtlichkeit halber in Figur 3 geöffnet dargestellt. Sie sind im laufenden Betrieb aber vorzugsweise geschlossen. Insbesondere werden sie synchron mit dem Windenergieschalter 309 und dem Photovoltaikschalter 215 geschaltet. Es wird vorgeschlagen, dass der Windenergieausgangsschalter 371 synchron mit dem Windenergieschalter 209 geschaltet wird und der Photovoltaikausgangsschalter 372 synchron mit dem Photovoltaikschalter 215 geschaltet wird.

Diese vier Schalter können auch als Sicherheitsschalter dienen, es kommt aber auch in Betracht, dass dann, wenn bspw. keine Sonneneinstrahlung vorliegt, insbesondere also in der Nacht, und viel Windenergie verfügbar ist, dass dann der Photovoltaikschalter 215 und der Photovoltaikausgangsschalter 372 geöffnet sind und alle Kopplungsschalter, also der erste bis dritte Kopplungsschalte 221 bis 223 und auch der erste bis dritte Ausgangskopplungsschalter 361 bis 263 geschlossen sind, so dass das Windenergiesystem 202 sämtliche Wechselrichter 231 bis 234 verwenden kann. Sinngemäß kommt auch in Betracht, dass bei sehr starker Sonneneinstrahlung und Windstille die Photovoltaikanlage 204 sämtliche Wechselrichter 231 bis 234 verwendet.

Die Ausgangsstromschaltvorrichtung 360 schafft so einen ersten und einen zweiten Teilstromausgang 381 und 382, in dem ein erster Teilausgangsstrom I_{T1} und ein zweiter Teilausgangsstrom I_{T2} ausgegeben werden. Diese werden einer ersten bzw. zweiten Primärwicklung 383 bzw. 384 des Transformators 316 zugeführt. In dem Transformator 316 werden sie dann überlagert und an der Sekundärwicklung 386 als Gesamtausgangsstrom I'_{G} mit hochtransformatierter Spannung ausgegeben. So können diese beiden Teilausgangsströme I_{T1} und I_{T2} trotz galvanischer Trennung zusammengeführt werden. Somit kann das Windenergiesystem 202 mit den ihm zugeordneten Wechselrichtern einerseits und die Photovoltaikanlage 204 mit den ihr zugeordneten Wechselrichtern andererseits vollständig galvanisch voneinander getrennt arbeiten.

Sowohl die Zwischenkreisschaltvorrichtung 236 als auch die Ausgangsstromschaltvorrichtung 360 können jeweils als Schaltmatrix bezeichnet oder ausgebildet sein. Eine solche Schaltmatrix weist viele einzelne Schalter auf und durch entsprechendes Schließen einiger Schalter und Öffnen anderer Schalter können entsprechende Strompfade gebildet werden und gewünschte Elemente elektrisch verbunden werden.

Die zugrundeliegende Idee der Erfindung wurde anhand der Figuren, besonders anhand der Figuren 2 und 3 erläutert. Eine grundlegende Idee ist dabei, den Zwischenkreis einer Windenergieanlage beim zusätzlichen Anschluss einer Photovoltaikanlage auftrennbar zu gestalten. Insoweit könnten alle dargestellten Wechselrichter 231 bis 234 Wechselrichter des Windenergiesystems 202 sein, die nun zusätzlich auch zum Wechselrichten von Leistung der Photovoltaikanlage 204 genutzt werden. Diese Ergänzung der Photovoltaikanlage wird durch die vorgeschlagene Verschaltung, besonders durch die Zwischenkreisschaltvorrichtung 236 erreicht.

Der Vorteil hierdurch ist, dass die Betriebsspannung des entsprechenden Gleichspannungszwischenkreises, nämlich besonders des zweiten Teilzwischenkreises, auf die Spannung der Photovoltaikanlage angepasst werden kann, die für das MPP-Verfahren benötigt wird bzw. dabei auftritt. Diese Spannung kann auch als MPP-Spannung bezeichnet werden. Die Zwischenkreisspannung des Windenergiesystems, insbesondere einer entsprechenden Windenergieanlage, wird dabei nicht verändert. Dadurch benötigt die Photovoltaikanlage keinen zusätzlich galvanisch getrennten Gleichstromsteller, bzw. eine galvanische Trennung kann durch den Transformator realisiert werden. Die vorgeschlagene Auftrennung wird durch eine Schaltmatrix realisiert, die hier als Zwischenkreisschaltvorrichtung 236 erläutert wurde. Durch diese Schaltmatrix können die Wechselrichter, in der praktischen Umsetzung sind es besonders entsprechende Leistungsschränke, teilweise zwischen dem Windenergiesystem und der Photovoltaikanlage umverteilt werden.

Durch die Antikorrelation einer Einspeisung von Windenergie einerseits und Photovoltaikenergie andererseits werden die Wechselrichter, die auch als Umrichter bezeichnet werden können, so entsprechend der Einspeisesituation in unterschiedlichen Einspeisern, also Windenergiesystem oder Photovoltaikanlage, zugeordnet und dadurch immer im Wesentlichen optimal ausgelastet.

Die Realisierung einer galvanischen Trennung kann trafoseitig, also ausgangseitig zum Transformator 316 hin, durch eine zweite Niederspannungswicklung realisiert werden, die als zweite Primärwicklung 384 dargestellt wurde. Die Sekundärwicklung, die bei dem Transformator 316 eine Mittelspannungswicklung bilden kann, bleibt aufgrund der im Wesentlichen gleichbleibenden Gesamtleistung unverändert. Hier ist trafoseitig eine zweite Schaltmatrix vorgesehen, nämlich die Ausgangsstromschaltvorrichtung 360, welche die Wechselrichter, also in der praktischen Umsetzung die Leistungsschränke, zur galvanischen Trennung auf die beiden Niederspannungswicklungen, also die erste und zweite Primärwicklung 383 bzw. 384 verteilt.

Sind an einem spezifischen Standort häufig Zeitpunkte vorhanden, bei denen die Summenleistung aus Windenergie und Solarenergie die Gesamtleistung der Windenergieanlage übersteigt, kann durch eine leichte Überdimensionierung, bspw. um jeweils 10 % am Transformator und bei der Umrichterkapazität, der Integrationsgrad auf nahezu 100 % gebracht werden. Die Photovoltaikanlage 204 kann dadurch also fast ohne Einbußen in ein existierendes Windenergieanlagensystem integriert werden und das kann zusammen die regenerative Energieerzeugungsanlage bilden.

Es wurde erkannt, dass dann, wenn eine Photovoltaikanlage, die als PV-Anlage abgekürzt werden kann, an den Gleichspannungszwischenkreis einer Windenergieanlage angeschlossen werden soll, die Betriebsspannung der PV-Anlage auf die Zwischenkreisspannung der Windenergieanlage angepasst werden muss, und die PV-Anlage muss u.U. von der Windenergieanlage galvanisch getrennt werden. Die hier dargestellte Lösung ermöglicht dies durch eine Auftrennung des Zwischenkreises einer Windenergieanlage und Zuordnung der Wechselrichter, die auch als Umrichter bezeichnet werden können, auf einen der beiden Zwischenkreise durch eine Schaltmatrix.

Dadurch kann auch eine gemeinsame Nutzung von Hardware und Infrastruktur beim Anschluss von PV-Anlagen an einem Netzverknüpfungspunkt eines Windenergiesystems erreicht werden.

## Patentansprüche

1. Wechselrichteranordnung (230) mit mehreren Wechselrichtern (231-234), wobei
- jeder Wechselrichter (231-234) einen Gleichspannungszwischenkreis (241-244) und einen Wechselstromausgang (251-254) aufweist, um aus einer Gleichspannung am Gleichspannungszwischenkreis einen Wechselstrom zu erzeugen und an dem Wechselstromausgang auszugeben, und
- die Wechselrichteranordnung (230) eine Zwischenkreisschaltvorrichtung (236) aufweist, dazu eingerichtet, die Gleichspannungszwischenkreise mehrerer Wechselrichter elektrisch zu verbinden oder zu trennen, um wenigstens einen ersten und einen zweiten Teilzwischenkreis (210, 220) zu bilden, und die Gleichspannungszwischenkreise der Wechselrichter jeweils wahlweise mit dem ersten oder zweiten oder ggf. einem weiteren Teilzwischenkreis galvanisch zu verbinden, wobei
- der erste und der zweite Teilzwischenkreis und ggf. weitere Teilzwischenkreise galvanisch voneinander getrennt sind, wobei
- der erste Teilzwischenkreis (210) einen Windenergieanschluss (208) aufweist, zum Verbinden mit einem Windenergiesystem (202), das eine oder mehrere Windenergieanlagen (100) aufweist, um darüber von dem Windenergiesystem erzeugte elektrische Leistung zu erhalten, und
- der zweite Teilzwischenkreis (220) einen Photovoltaikanschluss (214) aufweist, zum Verbinden mit einer Photovoltaikanlage (204), um darüber von der Photovoltaikanlage erzeugte elektrische Leistung zu erhalten, wobei
- die Wechselrichteranordnung dazu vorbereitet ist, dass sich die Zwischenkreisspannungen zwischen dem ersten und zweiten Teilzwischenkreis unterscheiden, **dadurch gekennzeichnet, dass**
- das Windenergiesystem (202) und die Photovoltaikanlage (204) jeweils durch eine Nennleistung gekennzeichnet sind,
- die Wechselrichteranordnung (230) eine Nennleistung aufweist, die der Nennleistung des Windenergiesystems (202) zuzüglich einer Reserveleistung entspricht, wobei
- die Reserveleistung einem Wert entspricht, der kleiner als die Nennleistung der Photovoltaikanlage (204) ist.

2. Wechselrichteranordnung (230) nach Anspruch 1,
**dadurch gekennzeichnet, dass**
dass jeder Wechselrichter eingerichtet ist mit einem Toleranzbandverfahren arbeiten.

3. Wechselrichteranordnung (230) nach Anspruch 1 oder 2,
**dadurch gekennzeichnet, dass**
- Wechselrichter, deren Gleichspannungszwischenkreis mit dem ersten Teilzwischenkreis (210) verbunden sind, zu einer ersten Wechselrichterteilanordnung zusammengefasst werden, um einen ersten Teilwechselstrom zu erzeugen, und
- Wechselrichter, deren Gleichspannungszwischenkreis mit dem zweiten Teilzwischenkreis (220) verbunden sind, zu einer zweiten Wechselrichterteilanordnung zusammengefasst werden, um einen zweiten Teilwechselstrom zu erzeugen, wobei
- der erste und zweite Teilwechselstrom zum Einspeisen in ein elektrisches Versorgungsnetz zu einem Gesamtwechselstrom (I_{G}) zusammengeführt werden und
- wenigstens mittels der Zwischenkreisschaltvorrichtung (236) Wechselrichter wahlweise der ersten oder zweiten Wechselrichteranordnung zugeordnet werden können.

4. Wechselrichteranordnung (230) nach einem der vorstehenden Ansprüche,
**dadurch gekennzeichnet, dass**
- die Wechselstromausgänge der Wechselrichter, zumindest die Wechselstromausgänge von Wechselrichtern unterschiedlicher bzw. der unterschiedlichen Wechselrichterteilanordnungen, galvanisch voneinander getrennt sind und/oder
- die Wechselrichter, zumindest die Wechselrichter der unterschiedlichen Wechselrichterteilanordnungen, so an einen Transformator (316) mit wenigstens zwei Primärwicklungen angeschlossen sind, dass ihre Wechselströme in dem Transformator zu einem gemeinsamen Wechselstrom überlagert werden.

5. Wechselrichteranordnung (230) nach einem der vorstehenden Ansprüche,
**dadurch gekennzeichnet, dass**
- die Wechselrichteranordnung eine Ausgangsstromschaltvorrichtung (360) aufweist, dazu eingerichtet, Wechselstromausgänge mehrerer Wechselrichter elektrisch zu verbinden oder zu trennen, um einen ersten und einen zweiten Teilstromausgang (381, 382) zu bilden, und die Wechselstromausgänge der Wechselrichter jeweils wahlweise mit dem ersten oder zweiten Teilstromausgang galvanisch zu verbinden, wobei
- der erste und der zweite Teilstromausgang durch die Ausgangsstromschaltvorrichtung galvanisch voneinander getrennt sind, wobei insbesondere
- die Ausgangsstromschaltvorrichtung (360) mit der Zwischenkreisschaltvorrichtung (236) synchronisiert ist, so dass
- der erste Teilstromausgang einer bzw. der ersten Wechselrichterteilanordnung zugeordnet ist und
- der zweite Teilstromausgang einer bzw. der zweiten Wechselrichterteilanordnung zugeordnet ist.

6. Wechselrichteranordnung (230) nach einem der vorstehenden Ansprüche,
**dadurch gekennzeichnet, dass**
- an dem zweiten Teilzwischenkreis eine Zwischenkreisspannung in Abhängigkeit eines Arbeitspunktes der Photovoltaikanlage eingestellt wird.

7. Wechselrichteranordnung (230) nach einem der vorstehenden Ansprüche,
**dadurch gekennzeichnet, dass**
- die Reserveleistung maximal 20%, insbesondere maximal 10% der Nennleistung des Windenergiesystems (202) entspricht, und/oder
- die Reserveleistung einem Wert entspricht, der kleiner als 50% der Nennleistung der Photovoltaikanlage ist.

8. Regenerative Energieerzeugungsanlage (200) zum Einspeisen elektrischer Leistung in ein elektrisches Versorgungsnetz, umfassend
- wenigstens ein Windenergiesystem (202) zum Erzeugen elektrischer Leistung aus Wind,
- wenigstens eine Photovoltaikanlage (204) zum Erzeugen elektrischer Leistung aus Sonnenstrahlung,
- eine Wechselrichteranordnung gemäß einem der vorstehenden Ansprüche.

9. Regenerative Energieerzeugungsanlage (200) nach Anspruch 8,
**dadurch gekennzeichnet, dass**
- eine Steuereinrichtung zum Steuern der Wechselrichteranordnung vorgesehen ist, um die Wechselrichteranordnung in Anhängigkeit von momentan aus Wind erzeugbarer Leistung und momentan aus Sonnenstrahlung erzeugbarer Leistung zu steuern,
- das Windenergiesystem über den Windenergieanschluss an den ersten Teilzwischenkreis angeschlossen ist und
- die Photovoltaikanlage über den Photovoltaikanschluss an den zweiten Teilzwischenkreis angeschlossen ist.

10. Regenerative Energieerzeugungsanlage (200) nach Anspruch 8 oder 9,
**dadurch gekennzeichnet, dass**
- ein Energiespeicher vorgesehen ist, um elektrische Energie zu speichern oder abzugeben, und/oder
- ein elektrischer Verbraucher vorgesehen ist, um elektrische Energie zu verbrauchen, wobei
- die Zwischenkreisschaltvorrichtung dazu eingerichtet ist, einen dritten und optional einen vierten Teilzwischenkreis zu bilden und
- der Energiespeicher an den dritten Teilzwischenkreis angeschlossen ist und/oder
- der elektrische Verbraucher an den dritten oder vierten Teilzwischenkreis angeschlossen ist.

11. Verfahren zum Steuern einer regenerativen Energieerzeugungsanlage (200) und die regenerative Energieerzeugungsanlage (200) umfasst
- wenigstens ein Windenergiesystem (202) zum Erzeugen elektrischer Leistung aus Wind,
- wenigstens eine Photovoltaikanlage (204) zum Erzeugen elektrischer Leistung aus Sonnenstrahlung,
- eine Wechselrichteranordnung mit mehreren Wechselrichtern, wobei
- jeder Wechselrichter einen Gleichspannungszwischenkreis und einen Wechselstromausgang aufweist, und aus einer Gleichspannung am Gleichspannungszwischenkreis einen Wechselstrom erzeugt und an dem Wechselstromausgang ausgibt, und
- die Wechselrichteranordnung eine Zwischenkreisschaltvorrichtung aufweist, die die Gleichspannungszwischenkreise mehrerer Wechselrichter elektrisch verbindet oder trennt, und dadurch wenigstens einen ersten und einen zweiten Teilzwischenkreis bildet, und die Gleichspannungszwischenkreise der Wechselrichter dadurch jeweils wahlweise mit dem ersten oder zweiten oder ggf. einem weiteren Teilzwischenkreis galvanisch verbindet, wobei
- der erste und der zweite Teilzwischenkreis und ggf. weitere Teilzwischenkreise galvanisch voneinander getrennt sind,
- das Windenergiesystem über einen Windenergieanschluss an den ersten Teilzwischenkreis angeschlossen ist und die aus Wind erzeugte elektrische Leistung in den ersten Teilzwischenkreis einspeist, insbesondere mittels eines aktiven Gleichrichters, und
- die Photovoltaikanlage über einen Photovoltaikanschluss an den zweiten Teilzwischenkreis angeschlossen ist und die aus Sonnenstrahlung erzeugte elektrische Leistung in den zweiten Teilzwischenkreis einspeist, insbesondere mittels eines Stromstellers, **dadurch gekennzeichnet, dass**
- das Windenergiesystem (202) und die Photovoltaikanlage (204) jeweils durch eine Nennleistung gekennzeichnet sind,
- die Wechselrichteranordnung (230) eine Nennleistung aufweist, die der Nennleistung des Windenergiesystems (202) zuzüglich einer Reserveleistung entspricht, wobei
- die Reserveleistung einem Wert entspricht, der kleiner als die Nennleistung der Photovoltaikanlage (204) ist.

12. Verfahren nach Anspruch 11,
**dadurch gekennzeichnet, dass**
jeder Wechselrichter mit einem Toleranzbandverfahren arbeitet.

13. Verfahren nach Anspruch 11 oder 12,
**dadurch gekennzeichnet, dass**
- Wechselrichter, deren Gleichspannungszwischenkreis mit dem ersten Teilzwischenkreis (221) verbunden sind, zu einer ersten Wechselrichterteilanordnung (231) zusammengefasst werden, um einen ersten Teilwechselstrom zu erzeugen, und
- Wechselrichter, deren Gleichspannungszwischenkreis mit dem zweiten Teilzwischenkreis (220) verbunden sind, zu einer zweiten Wechselrichterteilanordnung (232) zusammengefasst werden, um einen zweiten Teilwechselstrom zu erzeugen, wobei
- der erste und zweite Teilwechselstrom zum Einspeisen in ein elektrisches Versorgungsnetz zu einem Gesamtwechselstrom zusammengeführt werden und
- wenigstens mittels der Zwischenkreisschaltvorrichtung (236) Wechselrichter wahlweise der ersten oder zweiten Wechselrichteranordnung (232) zugeordnet werden.

14. Verfahren nach einem der Ansprüche 11 bis 13,
**dadurch gekennzeichnet, dass**
- die Wechselrichteranordnung (230) eine Ausgangsstromschaltvorrichtung (360) aufweist, die Wechselstromausgänge mehrerer Wechselrichter elektrisch verbindet oder trennt, und dadurch einen ersten und einen zweiten Teilstromausgang (382) bildet, und die Wechselstromausgänge der Wechselrichter jeweils wahlweise mit dem ersten oder zweiten Teilstromausgang (382) galvanisch verbunden werden, und insbesondere
- die Ausgangsstromschaltvorrichtung (360) mit der Zwischenkreisschaltvorrichtung (236) synchronisiert ist, sodass die Ausgangsstromschaltvorrichtung (360) und die Zwischenkreisschaltvorrichtung (236) gemeinsam geschaltet werden, wobei
- der erste Teilstromausgang (381) einer bzw. der ersten Wechselrichterteilanordnung (231) zugeordnet ist und
- der zweite Teilstromausgang (382) einer bzw. der zweiten Wechselrichterteilanordnung (232) zugeordnet ist.

15. Verfahren nach einem der Ansprüche 11 bis 14,
**dadurch gekennzeichnet, dass**
die Wechselrichteranordnung (230), insbesondere die Zwischenkreisschaltvorrichtung (236), und ggf. die Ausgangsstromschaltvorrichtung (360), in Anhängigkeit von momentan aus Wind erzeugbarer Leistung und momentan aus Sonnenstrahlung erzeugbarer Leistung gesteuert wird.

## Claims

1. Inverter arrangement (230) having a plurality of inverters (231-234), wherein
- each inverter (231-234) has a DC voltage intermediate circuit (241-244) and an AC current output (251-254) in order to generate an AC current from a DC voltage at the DC voltage intermediate circuit and to output said AC current at the AC current output, and
- the inverter arrangement (230)
has an intermediate circuit switching device (236) designed to electrically connect or to isolate the DC voltage intermediate circuits of a plurality of inverters in order to form at least one first and one second partial intermediate circuit (210, 220), and to galvanically connect the DC voltage intermediate circuits of the inverters in each case selectively to the first or second or possibly a further partial intermediate circuit, wherein
- the first and the second partial intermediate circuit and possibly further partial intermediate circuits are galvanically isolated from one another,
wherein
- the first partial intermediate circuit (210) has a wind power terminal (208) for connection to a wind power system (202) that has one or more wind power installations (100) in order thereby to receive electric power generated by the wind power system, and
- the second partial intermediate circuit (220) has a photovoltaic terminal (214) for connection to a photovoltaic installation (204) in order thereby to receive electric power generated by the photovoltaic installation, wherein
- the inverter arrangement is designed such that the intermediate circuit voltages differ between the first and second partial intermediate circuit, **characterized in that**
- the wind power system (202) and the photovoltaic installation (204) are each **characterized by** a nominal power,
- the inverter arrangement (230) has a nominal power that corresponds to the nominal power of the wind power system (202) plus a reserve power, wherein
- the reserve power corresponds to a value that is less than the nominal power of the photovoltaic installation (204).

2. Inverter arrangement (230) according to Claim 1,
**characterized in that**
each inverter is configured to operate using a tolerance band method.

3. Inverter arrangement (230) according to Claim 1 or 2,
**characterized in that**
- inverters whose DC voltage intermediate circuit is connected to the first partial intermediate circuit (210) are combined to form a first inverter sub-arrangement in order to generate a first partial AC current, and
- inverters whose DC voltage intermediate circuit is connected to the second partial intermediate circuit (220) are combined to form a second inverter sub-arrangement in order to generate a second partial AC current, wherein
- the first and second partial AC current are combined to form an overall AC current (I_{G}) to be fed into an electricity supply grid and
- inverters may be assigned selectively to the first or second inverter arrangement at least by way of the intermediate circuit switching device (236).

4. Inverter arrangement (230) according to one of the preceding claims,
**characterized in that**
- the AC current outputs of the inverters, at least the AC current outputs of inverters of different or the different inverter sub-arrangements, are galvanically isolated from one another and/or
- the inverters, at least the inverters of the different inverter sub-arrangements, are connected to a transformer (316) having at least two primary windings such that their AC currents are overlaid in the transformer to form a joint AC current.

5. Inverter arrangement (230) according to one of the preceding claims,
**characterized in that**
- the inverter arrangement has an output current switching device (360) designed to electrically connect or to isolate AC current outputs of a plurality of inverters in order to form a first and a second partial current output (381, 382), and to galvanically connect the AC current outputs of the inverters in each case selectively to the first or second partial current output, wherein
- the first and the second partial current output are galvanically isolated from one another by the output current switching device, wherein in particular
- the output current switching device (360) is synchronized with the intermediate circuit switching device (236) such that
- the first partial current output is assigned to a or the first inverter sub-arrangement and
- the second partial current output is assigned to a or the second inverter sub-arrangement.

6. Inverter arrangement (230) according to one of the preceding claims,
**characterized in that**
- an intermediate circuit voltage is set depending on an operating point of the photovoltaic installation at the second partial intermediate circuit.

7. Inverter arrangement (230) according to one of the preceding claims,
**characterized in that**
- the reserve power corresponds to at most 20%, in particular at most 10% of the nominal power of the wind power system (202), and/or
- the reserve power corresponds to a value that is less than 50% of the nominal power of the photovoltaic installation.

8. Renewable energy generation installation (200) for feeding electric power into an electricity supply grid, comprising
- at least one wind power system (202) for generating electric power from wind,
- at least one photovoltaic installation (204) for generating electric power from solar radiation,
- an inverter arrangement according to one of the preceding claims.

9. Renewable energy generation installation (200) according to Claim 8,
**characterized in that**
- a controller for controlling the inverter arrangement is provided in order to control the inverter arrangement depending on power currently able to be generated from wind and power currently able to be generated from solar radiation,
- the wind power system is connected to the first partial intermediate circuit via the wind power terminal and
- the photovoltaic installation is connected to the second partial intermediate circuit via the photovoltaic terminal.

10. Renewable energy generation installation (200) according to Claim 8 or 9,
**characterized in that**
- an energy store is provided in order to store or to output electrical energy, and/or
- an electrical consumer is provided in order to consume electrical energy, wherein
- the intermediate circuit switching device is designed to form a third and optionally a fourth partial intermediate circuit and
- the energy store is connected to the third partial intermediate circuit and/or
- the electrical consumer is connected to the third or fourth partial intermediate circuit.

11. Method for controlling a renewable energy generation installation (200), and the renewable energy generation installation (200) comprises
- at least one wind power system (202) for generating electric power from wind,
- at least one photovoltaic installation (204) for generating electric power from solar radiation,
- an inverter arrangement having a plurality of inverters, wherein
- each inverter has a DC voltage intermediate circuit and an AC current output and generates an AC current from a DC voltage at the DC voltage intermediate circuit and outputs said AC current at the AC current output, and
- the inverter arrangement has an intermediate circuit switching device that electrically connects or isolates the DC voltage intermediate circuits of a plurality of inverters and thereby forms at least one first and one second partial intermediate circuit, and thereby galvanically connects the DC voltage intermediate circuits of the inverters in each case selectively to the first or second or possibly a further partial intermediate circuit, wherein
- the first and the second partial intermediate circuit and possibly further partial intermediate circuits are galvanically isolated from one another,
- the wind power system is connected to the first partial intermediate circuit via a wind power terminal and feeds the electric power generated from wind into the first partial intermediate circuit, in particular by way of an active rectifier, and
- the photovoltaic installation is connected to the second partial intermediate circuit via a photovoltaic terminal and feeds the electric power generated from solar radiation into the second partial intermediate circuit, in particular by way of a chopper, **characterized in that**
- the wind power system (202) and the photovoltaic installation (204) are each **characterized by** a nominal power,
- the inverter arrangement (230) has a nominal power that corresponds to the nominal power of the wind power system (202) plus a reserve power, wherein
- the reserve power corresponds to a value that is less than the nominal power of the photovoltaic installation (204).

12. Method according to Claim 11,
**characterized in that**
each inverter operates using a tolerance band method.

13. Method according to Claim 11 or 12,
**characterized in that**
- inverters whose DC voltage intermediate circuit is connected to the first partial intermediate circuit (221) are combined to form a first inverter sub-arrangement (231) in order to generate a first partial AC current, and
- inverters whose DC voltage intermediate circuit is connected to the second partial intermediate circuit (220) are combined to form a second inverter sub-arrangement (232) in order to generate a second partial AC current, wherein
- the first and second partial AC current are combined to form an overall AC current to be fed into an electricity supply grid and
- inverters are assigned selectively to the first or second inverter arrangement (232) at least by way of the intermediate circuit switching device (236).

14. Method according to one of Claims 11 to 13,
**characterized in that**
- the inverter arrangement (230) has an output current switching device (360) that electrically connects or isolates the AC current outputs of a plurality of inverters and thereby forms a first and a second partial current output (382), and the AC current outputs of the inverters are in each case galvanically connected selectively to the first or second partial current output (382), and in particular
- the output current switching device (360) is synchronized with the intermediate circuit switching device (236) such that the output current switching device (360) and the intermediate circuit switching device (236) are switched jointly, wherein
- the first partial current output (381) is assigned to a or the first inverter sub-arrangement (231) and
- the second partial current output (382) is assigned to a or the second inverter sub-arrangement (232).

15. Method according to one of Claims 11 to 14,
**characterized in that**
the inverter arrangement (230), in particular the intermediate circuit switching device (236), and possibly the output current switching device (360), is controlled depending on power currently able to be generated from wind and power currently able to be generated from solar radiation.

## Revendications

1. Ensemble d'onduleurs (230) avec plusieurs onduleurs (231-234), dans lequel
- chaque onduleur (231-234) présente un circuit intermédiaire à tension continue (241-244) et une sortie de courant alternatif (251-254) pour produire un courant alternatif à partir d'une tension continue sur le circuit intermédiaire à tension continue et le distribuer sur la sortie de courant alternatif, et
- l'ensemble d'onduleurs (230) présente un dispositif de commutation de circuit intermédiaire (236) configuré pour relier ou séparer électriquement les circuits intermédiaires à tension continue de plusieurs onduleurs pour former au moins un premier et un deuxième circuit intermédiaire partiel (210, 220), et pour relier galvaniquement les circuits intermédiaires à tension continue des onduleurs respectivement au choix au premier ou deuxième ou, le cas échéant, à un autre circuit intermédiaire partiel,
dans lequel
- le premier et le deuxième circuit intermédiaire partiel et, le cas échéant, d'autres circuits intermédiaires partiels sont séparés galvaniquement l'un de l'autre, dans lequel
- le premier circuit intermédiaire partiel (210) présente un raccordement d'énergie éolienne (208), pour se connecter à un système d'énergie éolienne (202), qui présente une ou plusieurs éoliennes (100) pour recevoir par l'intermédiaire de celui-ci la puissance électrique produite par le système d'énergie éolienne, et
- le deuxième circuit intermédiaire partiel (220) présente un raccordement photovoltaïque (214) pour se connecter à une installation photovoltaïque (204) afin de recevoir par l'intermédiaire de celle-ci une puissance électrique produite par l'installation photovoltaïque, dans lequel
- l'ensemble d'onduleurs est préparé pour que les tensions de circuit intermédiaire diffèrent entre le premier et le deuxième circuit intermédiaire partiel,
**caractérisé en ce que**
- le système d'énergie éolienne (202) et l'installation photovoltaïque (204) sont chacun **caractérisés par** une puissance nominale,
- l'ensemble d'onduleurs (230) présente une puissance nominale qui correspond à la puissance nominale du système d'énergie éolienne (202) plus une puissance de réserve, dans lequel
- la puissance de réserve correspond à une valeur qui est inférieure à la puissance nominale de l'installation photovoltaïque (204).

2. Ensemble d'onduleurs (230) selon la revendication 1,
**caractérisé en ce que**
chaque onduleur est configuré pour fonctionner avec un procédé de bande de tolérance.

3. Ensemble d'onduleurs (230) selon la revendication 1 ou 2,
**caractérisé en ce que**
- des onduleurs dont le circuit intermédiaire à tension continue sont reliés au premier circuit intermédiaire partiel (210) sont regroupés en un premier ensemble partiel d'onduleurs pour produire un premier courant alternatif partiel, et
- des onduleurs dont le circuit intermédiaire à tension continue sont reliés au deuxième circuit intermédiaire partiel (220) sont regroupés en un second ensemble partiel d'onduleurs pour produire un second courant alternatif partiel, dans lequel
- le premier et second courant alternatif partiel pour être injectés dans un réseau d'alimentation électrique sont réunis en un courant alternatif total (I_{G}) et
- des onduleurs peuvent être affectés au choix au premier ou second ensemble d'onduleurs au moins au moyen du dispositif de commutation de circuit intermédiaire (236).

4. Ensemble d'onduleurs (230) selon l'une quelconque des revendications précédentes,
**caractérisé en ce que**
- les sorties de courant alternatif des onduleurs, au moins les sorties de courant alternatif d'onduleurs de différents ou des différents ensembles partiels d'onduleurs, sont séparées galvaniquement les unes des autres et/ou
- les onduleurs, au moins les onduleurs des différents ensembles partiels d'onduleurs, sont raccordés à un transformateur (316) avec au moins deux enroulements primaires de sorte que leurs courants alternatifs soient superposés dans le transformateur en un courant alternatif commun.

5. Ensemble d'onduleurs (230) selon l'une quelconque des revendications précédentes,
**caractérisé en ce que**
- l'ensemble d'onduleurs présente un dispositif de commutation de courant de sortie (360) configuré pour relier ou séparer électriquement des sorties de courant alternatif de plusieurs onduleurs pour former une première et une seconde sortie de courant partiel (381, 382), et pour relier galvaniquement les sorties de courant alternatif des onduleurs respectivement au choix à la première ou seconde sortie de courant partiel, dans lequel
- la première et la seconde sortie de courant partiel sont séparées galvaniquement l'une de l'autre par le dispositif de commutation de courant de sortie, dans lequel en particulier
- le dispositif de commutation de courant de sortie (360) est synchronisé avec le dispositif de commutation de circuit intermédiaire (236) de sorte que
- la première sortie de courant partiel est affectée à un ou au premier ensemble partiel d'onduleurs et
- la seconde sortie de courant partiel est affectée à un ou au second ensemble partiel d'onduleurs.

6. Ensemble d'onduleurs (230) selon l'une quelconque des revendications précédentes,
**caractérisé en ce que**
- une tension de circuit intermédiaire est réglée sur le deuxième circuit intermédiaire partiel en fonction d'un point de fonctionnement de l'installation photovoltaïque.

7. Ensemble d'onduleurs (230) selon l'une quelconque des revendications précédentes,
**caractérisé en ce que**
- la puissance de réserve correspond au maximum à 20 %, notamment au maximum à 10 % de la puissance nominale du système d'énergie éolienne (202), et/ou
- la puissance de réserve correspond à une valeur qui est inférieure à 50 % de la puissance nominale de l'installation photovoltaïque.

8. Installation de production d'énergie renouvelable (200) pour injecter de la puissance électrique dans un réseau d'alimentation électrique, comprenant
- au moins un système d'énergie éolienne (202) pour produire de la puissance électrique à partir du vent,
- au moins une installation photovoltaïque (204) pour produire de la puissance électrique à partir du rayonnement solaire,
- un ensemble d'onduleurs selon l'une quelconque des revendications précédentes.

9. Installation de production d'énergie renouvelable (200) selon la revendication 8,
**caractérisé en ce que**
- un appareil de commande pour commander l'ensemble d'onduleurs est prévu pour commander l'ensemble d'onduleurs en fonction de la puissance pouvant être momentanément produite à partir du vent et de la puissance pouvant être momentanément produite à partir du rayonnement solaire,
- le système d'énergie éolienne est raccordé au premier circuit intermédiaire partiel par l'intermédiaire du raccordement d'énergie éolienne et
- l'installation photovoltaïque est raccordée au deuxième circuit intermédiaire partiel par l'intermédiaire du raccordement photovoltaïque.

10. Installation de production d'énergie renouvelable (200) selon la revendication 8 ou 9,
**caractérisé en ce que**
- un accumulateur d'énergie est prévu pour stocker ou délivrer de l'énergie électrique, et/ou
- un consommateur électrique est prévu pour consommer de l'énergie électrique, dans lequel
- le dispositif de commutation de circuit intermédiaire est configuré pour former un troisième et facultativement un quatrième circuit intermédiaire partiel et
- l'accumulateur d'énergie est raccordé au troisième circuit intermédiaire partiel et/ou
- le consommateur électrique est raccordé au troisième ou quatrième circuit intermédiaire partiel.

11. Procédé de commande d'une installation de production d'énergie renouvelable (200) et l'installation de production d'énergie renouvelable (200) comprend
- au moins un système d'énergie éolienne (202) pour produire de la puissance électrique à partir du vent,
- au moins une installation photovoltaïque (204) pour produire de la puissance électrique à partir du rayonnement solaire,
- un ensemble d'onduleurs avec plusieurs onduleurs, dans lequel
- chaque onduleur présente un circuit intermédiaire à tension continue et une sortie de courant alternatif, et produit un courant alternatif à partir d'une tension continue sur le circuit intermédiaire à tension continue et le délivre sur la sortie de courant alternatif, et
- l'ensemble d'onduleurs présente un dispositif de commutation de circuit intermédiaire qui relie ou sépare électriquement les circuits intermédiaires à tension continue de plusieurs onduleurs, et forme ainsi au moins un premier et un deuxième circuit intermédiaire partiel, et relie ainsi galvaniquement les circuits intermédiaires à tension continue des onduleurs respectivement au choix au premier ou au deuxième ou, le cas échéant, à un autre circuit intermédiaire partiel, dans lequel
- le premier et le deuxième circuit intermédiaire partiel et, le cas échéant, d'autres circuits intermédiaires partiels sont séparés galvaniquement l'un de l'autre,
- le système d'énergie éolienne est raccordé au premier circuit intermédiaire partiel par l'intermédiaire d'un raccordement d'énergie éolienne et injecte la puissance électrique produite à partir du vent dans le premier circuit intermédiaire partiel, en particulier au moyen d'un redresseur actif, et
- l'installation photovoltaïque est raccordée au deuxième circuit intermédiaire partiel par l'intermédiaire d'un raccordement photovoltaïque et injecte la puissance électrique produite à partir du rayonnement solaire dans le deuxième circuit intermédiaire partiel, en particulier au moyen d'un régulateur de courant,
**caractérisé en ce que**
- le système d'énergie éolienne (202) et l'installation photovoltaïque (204) sont chacun **caractérisés par** une puissance nominale,
- l'ensemble d'onduleurs (230) présente une puissance nominale qui correspond à la puissance nominale du système d'énergie éolienne (202) plus une puissance de réserve, dans lequel
- la puissance de réserve correspond à une valeur qui est inférieure à la puissance nominale de l'installation photovoltaïque (204).

12. Procédé selon la revendication 11,
**caractérisé en ce que**
chaque onduleur fonctionne avec un procédé de bande de tolérance.

13. Procédé selon la revendication 11 ou 12,
**caractérisé en ce que**
- des onduleurs dont le circuit intermédiaire à tension continue sont reliés au premier circuit intermédiaire partiel (221) sont regroupés en un premier ensemble partiel d'onduleurs (231) pour produire un premier courant alternatif partiel, et
- des onduleurs dont le circuit intermédiaire à tension continue sont reliés au deuxième circuit intermédiaire partiel (220) sont regroupés en un second ensemble partiel d'onduleurs (232) pour produire un second courant alternatif partiel, dans lequel
- le premier et second courant alternatif partiel pour être injectés dans un réseau d'alimentation électrique sont réunis en un courant alternatif total et
- des onduleurs peuvent être affectés au choix au premier ou second ensemble d'onduleurs (232) au moins au moyen du dispositif de commutation de circuit intermédiaire (236).

14. Procédé selon l'une quelconque des revendications 11 à 13,
**caractérisé en ce que**
- l'ensemble d'onduleurs (230) présente un dispositif de commutation de courant de sortie (360) qui relie ou sépare électriquement les sorties de courant alternatif de plusieurs onduleurs, et forme ainsi une première et une seconde sortie de courant partiel (382), et les sorties de courant alternatif des onduleurs sont respectivement reliées galvaniquement au choix à la première ou seconde sortie de courant partiel (382), et en particulier
- le dispositif de commutation de courant de sortie (360) est synchronisé avec le dispositif de commutation de circuit intermédiaire (236) de sorte que le dispositif de commutation de courant de sortie (360) et le dispositif de commutation de circuit intermédiaire (236) sont commutés ensemble, dans lequel
- la première sortie de courant partiel (381) est affectée à un ou au premier ensemble partiel d'onduleurs (231) et
- la seconde sortie de courant partiel (382) est affectée à un ou au second ensemble partiel d'onduleurs (232).

15. Procédé selon l'une quelconque des revendications 11 à 14,
**caractérisé en ce que**
l'ensemble d'onduleurs (230), en particulier le dispositif de commutation de circuit intermédiaire (236), et le cas échéant le dispositif de commutation de courant de sortie (360), est commandé en fonction de la puissance pouvant être momentanément produite à partir du vent et de la puissance pouvant être momentanément produite à partir du rayonnement solaire.
